# FASCICULE DE BREVET EUROPEEN

(11) **EP 1 064 978 B1**
(45) Date de publication et mention de la délivrance du brevet: **12.12.2007**
(21) Numéro de dépôt: 00401654.9
(22) Date de dépôt: 13.06.2000
(51) Int. Cl.: B01D 53/04, B01J 20/18

(54) **Procédé de purification d'air par adsorption sur zeolite échangée au baryum**
Verfahren zur Reinigung von Luft durch Adsorption auf Barium ausgetauschtem Zeolith
Process for cleaning air by adsorption on barium exchanged zeolite

(30) Priorité: 02.07.1999 FR 9908566
(43) Date de publication de la demande: 03.01.2001
(73) Titulaire: L'AIR LIQUIDE, Société Anonyme pour l'Etude et l'Exploitation des Procédés Georges Claude, 75007 Paris (FR)
(72) Inventeur: Kraus, Georges, 75006 Paris (FR); Millet, Cyrille, 75014 Paris (FR); Moreau, Serge, 78140 Velizy Villacoublay (FR); Gabillard, Jean-Pierre, 78610 Auffargis (FR)
(74) Mandataire: Pittis, Olivier

(56) Documents cités:
- EP-A- 0 591 919
- WO-A1-00/50166
- US-A- 3 885 927
- US-A- 4 957 514
- PATENT ABSTRACTS OF JAPAN vol. 11, no. 13, 14 janvier 1987 (1987-01-14) & JP 61 191516 A (UNION SHOWA KK), 26 août 1986 (1986-08-26)

## Description

Le but de la présente invention est de proposer un procédé de prétraitement ou purification d'un flux gazeux constitué d'air atmosphérique, préalablement à la séparation cryogénique dudit air, en particulier par distillation cryogénique.

Il est connu que l'air atmosphérique contient des composés devant être éliminés avant l'introduction dudit air dans les échangeurs thermiques de la boîte froide d'une unité de séparation d'air, notamment les composés dioxyde de carbone (CO₂), vapeur d'eau (H₂O) et/ou hydrocarbures (CnHm) par exemples.

En effet, en l'absence d'un tel prétraitement de l'air pour en éliminer ses impuretés CO₂ et vapeur d'eau, on assiste à une condensation et à une solidification en glace de ces impuretés lors du refroidissement de l'air à température cryogénique, d'où il peut résulter des problèmes de colmatage de l'équipement, notamment les échangeurs thermiques, des colonnes de distillation...

En outre, il est également d'usage d'éliminer les impuretés hydrocarbures susceptibles d'être présentes dans l'air afin d'éviter tout risque de détérioration de l'équipement, en particulier de la ou des colonnes de distillation situées en aval de la boîte froide.

Actuellement, ce prétraitement de l'air est effectué, selon le cas, par procédé TSA (Temperature Swing Adsorption), c'est-à-dire un procédé d'adsorption à variation de température, ou par procédé PSA (Pressure Swing Adsorption), c'est-à-dire un procédé d'adsorption à variation de pression ; par procédé PSA, on entend les procédés PSA proprement-dits, les procédés VSA (Vacuum Swing Adsorption), c'est-à-dire les procédés d'adsorption avec mise sous vide, les procédés VPSA, c'est-à-dire les procédés d'adsorption à variation de pression et avec mise sous vide, et analogues.

Classiquement, un cycle de procédé TSA de purification d'air comporte les étapes suivantes:
a) purification de l'air par adsorption des impuretés à pression super-atmosphérique et à température ambiante,
b) dépressurisation de l'adsorbeur jusqu'à la pression atmosphérique ou en dessous de la pression atmosphérique,
c) régénération de l'adsorbant à pression atmosphérique, notamment par les gaz résiduaires ou gaz déchets, typiquement de l'azote impur provenant d'une unité de séparation d'air et réchauffé jusqu'à une température supérieure à +80°C au moyen d'un ou plusieurs échangeurs thermiques,
d) refroidissement à température ambiante ou sub-ambiante de l'adsorbant, notamment en continuant à y introduire ledit gaz résiduaire issu de l'unité de séparation d'air, mais non réchauffé,
e) repressurisation de l'adsorbeur avec de l'air purifié issu, par exemple, d'un autre adsorbeur se trouvant en phase de production.

Habituellement, un cycle de procédé PSA de purification d'air comporte, quant à lui, sensiblement les mêmes étapes a), b) et e), mais se distingue d'un procédé TSA par une absence de réchauffement du ou des gaz résiduaires lors de l'étape de régénération (étape c)), donc l'absence de l'étape d) et, en général, un temps de cycle plus court qu'en procédé TSA.

Généralement, les dispositifs de prétraitement d'air comprennent deux adsorbeurs, fonctionnant de manière alternée, c'est-à-dire que l'un des adsorbeurs est en phase de production, pendant que l'autre est en phase de régénération.

De tels procédés TSA de purification d'air sont notamment décrits dans les documents US-A-3,738,084 et FR-A-7725845.

En général, l'élimination du CO₂ et de la vapeur d'eau est effectuée sur un ou plusieurs lits d'adsorbants, de préférence plusieurs lits d'adsorbants, à savoir généralement un premier adsorbant destiné à arrêter préférentiellement l'eau, par exemple un lit d'alumine activée, de gel de silice ou de zéolites, et un deuxième lit d'adsorbant pour arrêter préférentiellement le CO₂, par exemple une zéolite. A ce titre, on peut citer notamment les documents US-A-5,531,808, US-A-5,587,003 et US-A-4,233,038.

En effet, obtenir une élimination efficace du CO₂ et de la vapeur d'eau contenus dans l'air sur un même et unique lit d'adsorbant n'est pas chose aisée, car l'eau présente une affinité pour les adsorbants nettement supérieure à celle du CO₂ et il est donc habituel d'utiliser au moins deux lits ou couches d'adsorbants de natures différentes.

Ainsi, il est usuel d'utiliser une zéolite de type 13X pour éliminer le CO₂ puisque la zéolite 13X est réputée être particulièrement efficace pour arrêter de faibles quantités de CO₂ et éventuellement d'eau, car elle présente une forte affinité et sélectivité pour ces molécules polaires. De plus, la zéolite X présente des diamètres de micropores parmi les plus larges, ce qui lui permet d'adsorber avec une bonne cinétique des molécules de diamètre cinétique jusqu'à 0,8 nm, comme rappelé par le document D.W. Breck, "Zeolite molecular sieves", Krieger Publishing Company, 1984, p. 612.

Cependant, la zéolite 13X ne permet pas d'arrêter toutes les molécules néfastes susceptibles d'être présentes dans un flux gazeux.

En effet, les molécules gazeuses adsorbées par la zéolite 13X sont pour l'essentiel et par affinité croissante : méthane, éthane, propane, protoxyde d'azote, éthylène, dioxyde de carbone, butane, propylène (C₃H₆), acétylène (C₂H₂), toluène et méthylcyclohexane.

A ce titre, on peut se référer aux documents suivants : E. Alpay, "Adsorption parameters for strongly adsorbed hydrocarbon vapours on some commercial adsorbents", Gas Sep. & Purif., vol 10, N°1, pp 25 (1996) ; G. Calleja, "Multicomponent adsorption equilibrium of ethylene, propane, propylene and CO2 on 13X zeolite", Gas Sep. & Purif., Vol 8, N°4, P. 247 (1994) ; V. R. Choudhary, "Sorption isotherms of methane, ethane, ethene and carbon dioxide on NaX, NaY and Na-mordenite Zeolites", J. Chem. Soc. Faraday Trans., 91(17), P. 2935 (1995) ; et A. Cointot, P. Cartaud, C. Clavaud, "Etude de l'adsorption du protoxyde d'azote par différents tamis moléculaires", Journal de Chimie Physique, Vol 71, N°5, P. 765-770 (1974).

Il s'ensuit alors qu'une unité industrielle d'épuration en tête d'air strictement dimensionnée pour l'arrêt du dioxyde de carbone avec une zéolite standard, typiquement une zéolite 13X ou 5A, n'arrête que partiellement l'éthylène, le propane et le protoxyde d'azote, comme rappelé par le document Dr. J. Reyhing, "Removing hydrocarbons from the process air of air-separation plants using molecular-sieve adsorbers", Linde Reports on science and technology, 36/1983.

De manière analogue, cet état de fait pour les hydrocarbures est aussi décrit par Dr. J. Reyhing, dans le document précédent.

De même, en ce qui concerne le protoxyde d'azote, l'inefficacité de la zéolite 5A pour l'arrêt du N₂O par rapport au CO₂ a été mise en évidence par U. Wenning, Nitrous oxide in air separation plants, MUST'96, Munich Meeting on Air Separation Technology, October 10-11, 1996.

Par ailleurs, des problèmes similaires existent aussi avec l'éthylène qui est un hydrocarbure insaturé instable en présence d'oxygène ; soluble dans l'oxygène liquide à hauteur de 30000 ppm avec un faible coefficient d'équilibre soluté-gaz ; son point de congélation étant de -169°C, tandis que celui de l'oxygène liquide sous 1,2 bars est à -181°C.

On comprend alors aisément que si l'installation d'épuration en tête n'arrête pas parfaitement l'éthylène, on peut aisément le retrouver en aval de cette installation et des détériorations de l'installation de distillation cryogénique, en particulier des colonnes de distillation et/ou des vaporiseurs-condenseurs peuvent alors en résulter ; ce qui n'est pas acceptable.

Des problèmes similaires peuvent également se poser avec l'éthane et le propane qui peuvent se retrouver à l'état liquide à la température de l'oxygène liquide sous une pression de 1,2 bars.

Si certains documents proposent des solutions plus ou moins efficaces permettant d'éliminer certaines des impuretés pouvant se trouver dans un flux d'air atmosphérique, le problème d'une élimination efficace, c'est-à-dire d'un arrêt complet du propane, de l'éthylène et/ou du protoxyde d'azote contenus dans un flux gazeux, en particulier d'air, n'a pas encore trouvé de solution.

En effet, le document EP-A-847792 propose un procédé d'adsorption en cycle PSA des impuretés acétylène et hydrocarbures en C₃-C₈ en utilisant indifféremment une zéolite CaX, CaA, 5A, 13X ou Na-mordénite. Toutefois, il faut souligner que ce type d'adsorbant présente globalement des résultats moins satisfaisants qu'un double lit alumine activée/NaY.

Par ailleurs, les documents EP-A-766991 et EP-A-453202 proposent l'emploi d'alumine activée standard ou bien traitée pour une meilleure purification d'air par procédé PSA. Néanmoins, les impuretés cités sont uniquement l'eau et le CO_{2.}

En outre, les documents US-A-5,587,003 et US-A-5,531,808 décrivent l'utilisation de zéolites clinoptilolite ou LSX pour l'arrêt du dioxyde de carbone dans un flux d'air atmosphérique et à une température ambiante jusqu'à 80°C. Le choix des cations utilisés est extrêmement large, à savoir les groupes I, II et IIA, ainsi que le groupe IIIB, et aucune indication n'est donnée quant à l'influence possible d'un choix particulier d'ions pour l'arrêt des impuretés autres que le CO₂.

De manière similaire, plusieurs documents traitent de l'arrêt de l'éthylène ou du protoxyde d'azote par des adsorbants zéolitiques.

Ainsi, le document DD-A-6225345 décrit l'utilisation de charbon actif et d'une zéolite CaA pour la purification de l'atmosphère des chambres de conservation des fruits et légumes. En effet, la décomposition des végétaux libère de l'éthylène qu'il faut extraire pour prolonger leur conservation.

D'autres articles traitent de l'arrêt du protoxyde d'azote la zéolite 5A.

Ainsi, on peut citer le document F. Mayinger und R. Eggert-Steger, "Experimentelle und theorische Untersuchungen zur Koadsorption von CO2 und N2O am Molekularsieb 5A", Vol.27, n°7, P. 405-412, 1992, dans lequel il est précisé que la capacité d'adsorption en N₂O de la zéolithe 5A est moins importante que sa capacité d'adsorption en CO₂.

Le document SU-A-1357053 enseigne l'emploi de Bamordenite plutôt que de zéolite 5A pour éliminer le protoxyde d'azote, la régénération se fait à plus de 180°C.

On peut également citer le document S.D. Kovalev, S.E. Starobinets, R.G. Kefer, I.S. Puzanov, "Caractéristiques statiques et dynamiques de l'adsorption du protoxyde et de l'oxyde d'azote sur des sorbants résistants aux acides", Vol. 1, P. 38-41, 1982, où il est montré que la H-mordenite offre une capacité d'adsorption en N20 intéressante, mais présente, par contre, une capacité d'adsorption pour le dioxyde de carbone très faible.

Le document O.M. Dzhigit, A.V. Kiselev, T.A. Rachmanova, S.P. Zhanov, "Influence of Li+, Na+ and k+ Cation Concentrations in X and Y Zeolites on Isotherms and Heat of Adsorption of Propane and Water, Journal of the Chemical Society, Faraday Transactions, 1979 ; traite de l'adsorption du propane sur zéolite X et Y en fonction du cation utilisé : les cations sont Li+, Na+ et K+.

En outre, le document EP-A-294 588 enseigne l'utilisation d'une zéolite avec des cations Strontium pour l'arrêt du CO₂ de l'air.

L'arrêt du CO₂ d'un flux gazeux sur BaX est décrit dans le document US-A-3 885 927.

Cependant, ces deux publications ne parlent pas d'arrêt de N₂O, C₃H₈ ou C₂H₄.

Par ailleurs, le document WO-A-00/50166 enseigne l'utilisation de zéolites X à rapport Si/Al entre 1,15 et 1,50, échangées avec du baryum et éventuellement du potassium pour adsorber le paraxylène contenu dans des coupes d'hydrocarbures aromatiques en C8 en phase liquide.

En outre, le document JP-A-61191516 enseigne un procédé de synthèse de zéolites BaX à partir de zéolites NaX utilisables pour séparer CO, N₂, O₂, H₂O et CO₂.

En résumé, il apparaît que le problème de l'élimination des impuretés propane, éthylène et/ou propylène susceptibles d'être présentes dans un flux gazeux, en particulier un flux d'air, n'a pas trouvé de solution satisfaisante jusqu'à présent.

Le but de la présente invention est alors de résoudre le problème ci-dessus, c'est-à-dire de proposer un procédé de purification par adsorption d'un flux gazeux contenant des impuretés propane, éthylène et/ou protoxyde d'azote, et éventuellement des impuretés dioxyde de carbone et/ou vapeur d'eau susceptibles d'être présentes dans ce flux gazeux.

En d'autres termes, le but de l'invention n'est pas de proposer un adsorbant permettant d'arrêter le mieux le N₂O, le C₂H₄ et/ou le C₃H₈, mais de proposer un adsorbant qui arrête le CO₂ éventuellement présent aussi bien qu'une zéolite 13X (NaX) et que, lors du perçage en CO₂, les impuretés de type C₃H₈, C₂H₄ et N₂O soient parfaitement arrêtées, contrairement à ce qui peut être obtenu au moyen d'une zéolite 13X qui n'est pas la zéolite la mieux adaptée pour l'arrêt total et à la fois du dioxyde de carbone, du propane, de l'éthylène et/ou du protoxyde d'azote d'un flux gazeux, tel un flux d'air atmosphérique.

L'invention concerne alors un procédé de purification d'un flux gazeux contenant au moins une impureté choisie dans le groupe formé par le propane, le protoxyde d'azote et l'éthylène, dans lequel :
(a) on met en contact le flux gazeux à purifier avec au moins un adsorbant comprenant au moins une zéolite X contenant des cations baryum ;
(b) on adsorbe au moins une impureté sur ledit adsorbant.

Selon le cas, le procédé de l'invention peut comprendre l'un ou plusieurs des caractéristiques suivantes :
- la zéolite X contient au moins 30% de cations baryum, de préférence au moins 70% de cations baryum, préférentiellement encore de 75 à 98% de cations baryum.
- la zéolite X a une taille de pores comprise entre 4 et 10 Å, de préférence 5 et 8 Å.
- la zéolite contient, en outre, au moins un cation du group IA ou IIA, de préférence des cations potassium, lithium, calcium, strontium, magnesium et/ou sodium.
- la zéolite a un rapport Si/Al compris entre 1 et 1,40, de préférence compris entre 1 et 1,15, préférentiellement de l'ordre de 1.
- le flux de gaz est un flux d'air.
- le flux gazeux à purifier contient, en outre, au moins une impureté choisie parmi le dioxyde de carbone et la vapeur d'eau.
- on adsorbe, en outre, au moins une impureté choisie parmi le dioxyde de carbone et la vapeur d'eau, de préférence le dioxyde de carbone est adsorbé sur la zéolite X contenant des cations baryum.
- le flux gazeux est à une température comprise en -40°C et +80°C.
- la pression d'adsorption est comprise entre 3 bars et 40 bars, de préférence 5 bars et 25 bars.
- la pression de désorption est comprise entre 0,5 bars et 6 bars, de préférence 1 bar et 1,4 bars.
- le débit du flux gazeux est compris entre 1 et 10⁶ Nm³/h, de préférence 10⁴ et 5.10⁵ Nm³/h.
- il est de type PSA ou TSA, de préférence TSA.
- la température de régénération est comprise entre 80°C et 400°C, de préférence entre 100°C et 250°C.
- au moins une partie du flux gazeux débarrassé d'au moins une partie desdites impuretés est soumis à au moins une étape de distillation cryogénique.

L'invention concerne, par ailleurs, un adsorbant contenant une zéolite de type X ayant un rapport Si/Al de l'ordre de 1, et contenant de 10 à 98% de cations baryum, de 2 à 90% de cations sodium et/ou potassium, la somme des cations baryum et potassium et/ou sodium présents dans la zéolite représentant au moins 50% de la totalité des cations échangeables.

Avantageusement, l'adsorbant contient de 70 à 96% de cations baryum, le reste des sites échangeables étant occupés par des cations sodium et/ou potassium.

L'invention va maintenant être décrite plus en détail, en références aux figures annexées, données à titre illustratif mais non limitatif.

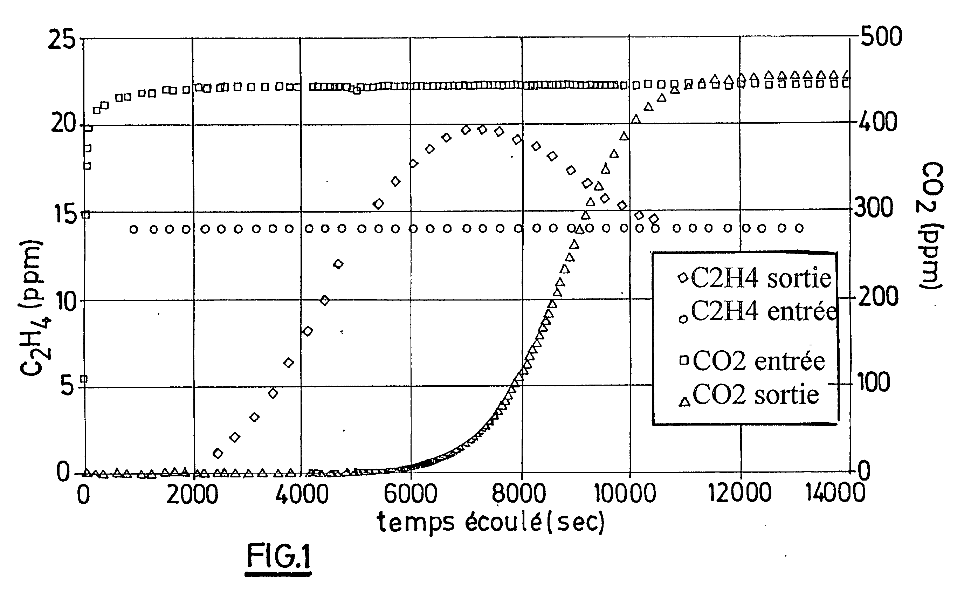

La figure 1 représente les courbes de percée simultanées d'éthylène et de CO₂ obtenues sur un lit de zéolite 13X commercialisée par la Société UOP sous la référence commerciale APGB 8x12, c'est-à-dire une zéolite 13X classique selon l'art antérieur.

Plus précisément, l'adsorbeur contenant un lit de 25 cm de zéolite 13X est alimenté avec un flux gazeux (azote) artificiellement pollué avec 14 ppm de C₂H₄ (courbe C₂H₄ entrée) et 450 ppm de CO₂ (courbe CO₂ entrée), à une température de 20°C, à une pression d'adsorption de 6 bars absolues et à un débit de 8,75 Nm³/h.

On voit sur la figure 1 que la percée en éthylène (courbe C₂H₄ sortie) devance largement la percée en CO₂ (courbe CO₂ sortie), et ce d'autant plus que l'éthylène est chassé des sites d'adsorption par le CO₂, de par un phénomène de coadsorption défavorable au C₂H₄.

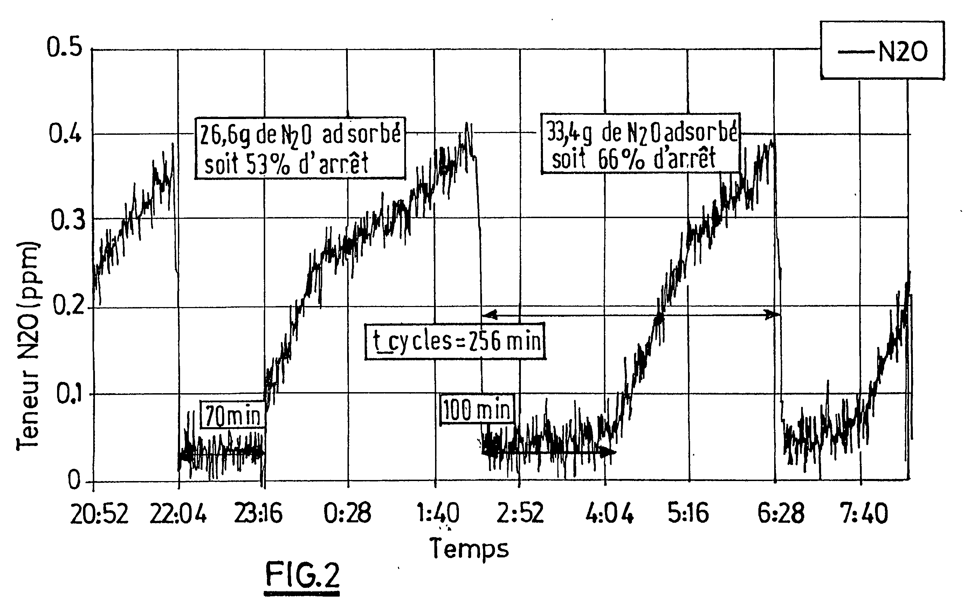

De façon similaire, la figure 2 représente la courbe de percée du protoxyde d'azote (N₂O) sur une unité industrielle de purification d'air située en amont d'une installation de séparation d'air par distillation cryogénique, c'est-à-dire une ASU (Air Separation Unit).

La courbe de percée a été établie entre un soir à 20h52 et le lendemain matin à 7h40.

L'adsorbant utilisé ici comprend un lit d'alumine de type procatolyse lequel est suivi d'un lit de zéolite 13X comme ci-dessus. La mesure du N₂O se fait à la sortie des bouteilles ou adsorbeurs d'épuration d'air.

Le débit d'air est de 16500 Nm³/h, la pression est de 10 bars absolu et la température de l'air est de l'ordre de 28°C.

On voit nettement sur la figure 2 que sur une unité de purification d'air industrielle équipée classiquement d'alumine activée et de tamis 13X, la percée en N₂O à chaque cycle est très importante, tandis qu'aucune percée en CO₂ n'est mesurée.

Il s'ensuit qu'au vu des figures 1 et 2, on comprend immédiatement que les adsorbants classiques constitués de zéolite 13X uniquement ou d'un lit composite de zéolite 13X précédée d'alumine activée ne permettent pas d'arrêter efficacement les impuretés C₂H₄ et N₂O contenues dans un flux de gaz.

A l'inverse, un procédé de purification de gaz conforme à la présente invention est particulièrement efficace pour l'élimination par adsorption des impuretés non seulement C₂H₄ et N₂O, mais aussi C₃H₈, CO₂ et/ou vapeur d'eau contenues dans un flux gazeux, en particulier dans un flux d'air.

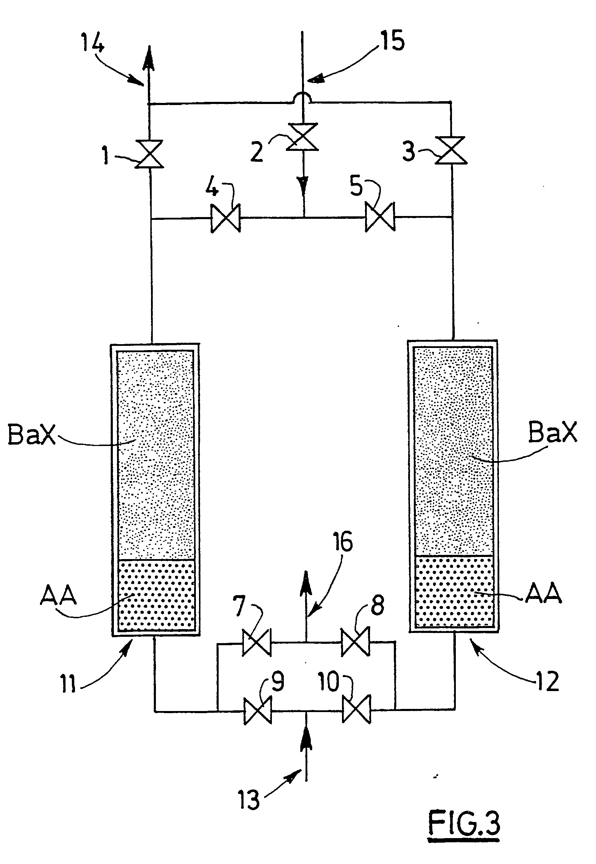

Pour démontrer cette efficacité d'un procédé selon l'invention, on a utilisé le dispositif d'adsorption schématisé sur la figure 3.

Celui-ci comprend deux adsorbeurs ou bouteilles d'adsorption 11 et 12 fonctionnant en parallèle selon un cycle TSA.

Ces adsorbeurs sont alternativement alimentés en air comprimé par une entrée 13 d'alimentation.

L'air comprimé est acheminé ensuite, via des canalisations de gaz, jusqu'à l'entrée un des adsorbeurs 11 ou 12, où il est successivement mis en contact avec un premier lit de particules d'alumine activée (AA) et un deuxième lit de particules de zéolite échangée au baryum (BaX), de manière à adsorber les impuretés contenues dans le flux gazeux sur lesdites particules d'adsorbant.

L'air purifié est récupéré, puis envoyé, via la canalisation 14 vers, par exemple, une unité de distillation cryogénique, pour y être distillé, de manière à produire de l'azote, de l'oxygène et/ou de l'argon.

L'adsorbeur 11 ou 12 qui n'est pas en phase de production, se trouve en phase de régénération.

Durant cette phase de régénération, un gaz de régénération, par exemple de l'azote résiduaire issu d'une colonne de distillation cryogénique d'une ASU, est réchauffé puis introduit à contre-courant, via la canalisation 15, dans l'adsorbeur à régénérer pour désorber les impuretés retenues par l'adsorbant, avant d'être évacué vers l'atmosphère, via une ligne 16 de mise à l'atmosphère.

L'ensemble du dispositif est piloté par des électrovannes 1 à 10.

Dans le cas présent, la zéolite (BaX) utilisée est une zéolite X échangée à environ 94% avec des cations baryum, c'est-à-dire une zéolite X dont 94% des sites échangeables sont occupés par des cations baryum ; les autres sites (6%) étant occupés par des cations sodium et/ou potassium.

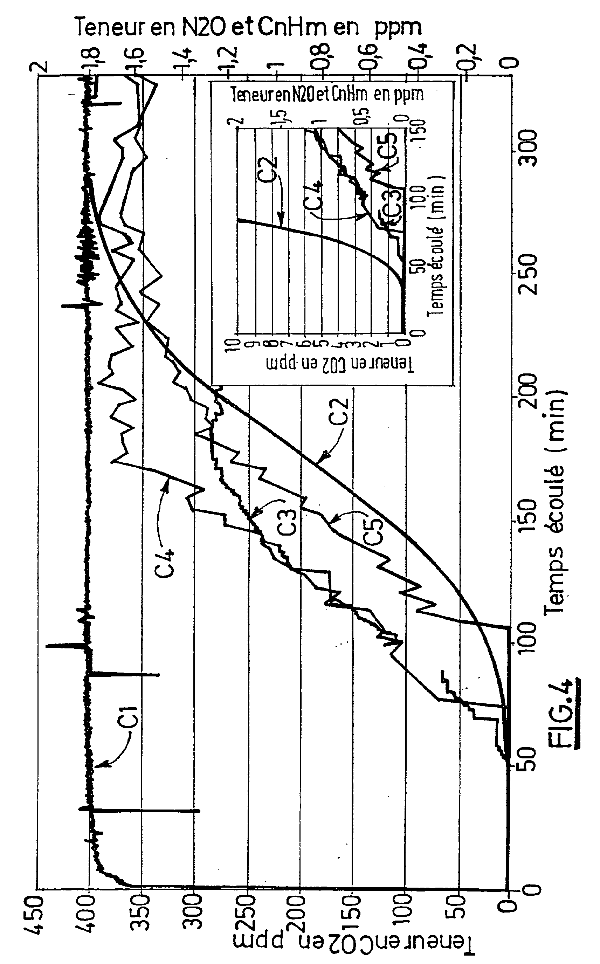

L'adsorption est effectuée dans les mêmes conditions opératoires que celles de la figure 1 et les résultats obtenues sont schématisés sur la figure 4, où l'on voit les courbes de percées de propane (C₃H₈), d'éthylène (C₂H₄), de protoxyde d'azote (N₂O) et de CO₂ sur la BaX échangée à 94%.

Les conditions opératoires dans lesquels les essais schématisés sur la figure 4 ont été effectués sont une pression de 6 bars, une température de 18°C et un débit de 8,72 Nm³/h d'un flux d'azote (N₂) artificiellement pollué par 400 ppm de CO₂, et environ 1,5 ppm de N₂O, CnHm et C₃H₈.

Sur la figure 4, la courbe C1 représente la teneur en CO₂ en entrée ; la courbe C2 représente la teneur en CO₂ en sortie ; la courbe C3 représente la teneur en N₂O en sortie ; la courbe C4 représente la teneur en C₂H₄ en sortie ; et la courbe C5 représente la teneur en C₃H₈ en sortie du lit d'adsorbant, en fonction du temps écoulé (en minutes).

On constate que, dans le cas d'une BaX, selon l'invention les percées en éthylène et en propane à 1.5 ppm s'effectuent bien après la percée en CO₂, alors que les ordres de percée étaient inversés sur la 13X (Cf. Figure 1).

En d'autres termes, une zéolite BaX échangée à 94% au baryum présente, de manière surprenante, une affinité pour le propane, l'éthylène et le protoxyde d'azote bien supérieure à celle d'une zéolite 13X (Cf. Figure 1 ou 2), et conserve tout de même une forte capacité d'adsorption en CO₂, puisque le N₂O, le C₂H₄ et le C₃H₈ percent après le CO₂, alors que, dans le cas d'une 13X classique, le N₂O, le C₂H₄ et le C₃H₈ percent bien avant le CO₂.

En définitive, il apparaît clairement que la zéolite 13X est insuffisante pour l'arrêt du propane, de l'éthylène et du protoxyde d'azote, alors que la zéolite BaX présente de nombreux avantages :
- diamètre de pore important, ce qui lui permet d'arrêter un grand nombre d'impuretés comme la 13X (butane, cyclohexane....),
- capacité d'adsorption en propane et éthylène importante,
- temps de percée en protoxyde d'azote identique à celui en CO₂.

Hormis la BaX on peut également noter l'intérêt des zéolithes suivantes : A, Faujasite, ZSM-18, Mordenite, Gmelinite, ZSM-12, Boggsite, Heulandite, Offretite, Cancrinite, Linde Type L, Stilbite, EMT, Mazzite. Ces zéolites sont des silico-aluminates à large pores semblables à la 13X. Leur capacité d'adsorption pour le propane, l'éthylène et le protoxyde d'azote peut être particulièrement importante après un échange cationique avec un ou plusieurs cations du groupe IIA de la classification périodique des éléments (Mg₂+, Ca₂+, Sr₂+, Ba₂+).

De façon particulière, la présente invention porte un procédé de purification d'air (H₂O, CO₂, hydrocarbures dont en particulier le propane et l'éthylène, ainsi que le protoxyde d'azote N₂O...) par TSA ou PSA d'une unité cryogénique de séparation d'air.

L'utilisation de la zéolite BaX permet de réduire les impuretés dans la colonne de distillation. Une épuration en tête avec du BaX permet donc de sécuriser l'ASU des risques causés par le propane, l'éthylène et le protoxyde d'azote, tout en permettant une élimination efficace du CO₂.

## Revendications

1. Procédé de purification d'un flux gazeux contenant au moins une impureté choisie dans le groupe formé par le propane, le protoxyde d'azote et l'éthylène, dans lequel :
(a) on met en contact le flux gazeux à purifier avec au moins un adsorbant comprenant au moins une zéolite X contenant des cations baryum ;
(b) on adsorbe au moins une impureté sur ledit adsorbant.

2. Procédé selon la revendication 1, **caractérisé en ce que** la zéolite X contient au moins 30% de cations baryum, de préférence au moins 70% de cations baryum, préférentiellement encore de 75 à 98% de cations baryum.

3. Procédé selon l'une des revendications 1 ou 2, **caractérisé en ce que** la zéolite X a une taille de pores comprise entre 4 et 10 Å, de préférence 5 et 8 Å.

4. Procédé selon l'une des revendications 1 à 4, **caractérisé en ce que** la zéolite contient, en outre, au moins un cation du groupe IA ou IIA, de préférence des cations potassium et/ou sodium.

5. Procédé selon l'une des revendications 1 à 4, **caractérisé en ce que** la zéolite a un rapport Si/Al compris entre 1 et 1,40, de préférence compris entre 1 et 1,15, préférentiellement de l'ordre de 1.

6. Procédé selon l'une des revendications 1 à 5, **caractérisé en ce que** le flux de gaz est un flux d'air.

7. Procédé selon l'une des revendications 1 à 6, **caractérisé en ce que** le flux gazeux à purifier contient, en outre, au moins une impureté choisie parmi le dioxyde de carbone et la vapeur d'eau.

8. Procédé selon l'une des revendications 1 à 7, qu'on adsorbe, en outre, au moins une impureté choisie parmi le dioxyde de carbone et la vapeur d'eau, de préférence le dioxyde de carbone ou la vapeur d'eau est adsorbée sur la zéolite X contenant des cations baryum.

9. Procédé selon l'une des revendications 1 à 8, **caractérisé en ce que** le flux gazeux est une température comprise en -40°C et +80°C.

10. Procédé selon l'une des revendications 1 à 9, **caractérisé en ce que** la pression d'adsorption est comprise entre 3 bars et 40 bars, de préférence 5 bars et 25 bars.

11. Procédé selon l'une des revendications 1 à 10, **caractérisé en ce que** la pression de désorption est comprise entre 0,5 bars et 6 bars, de préférence 1 bar et 1,5 bars.

12. Procédé selon l'une des revendications 1 à 11, **caractérisé en ce que** le débit du flux gazeux est compris entre 1 et 10⁶ Nm³/h, de préférence 10⁴ et 5.10⁵ Nm³/h.

13. Procédé selon l'une des revendications 1 à 12, **caractérisé en ce qu'**il est de type PSA ou TSA, de préférence TSA.

14. Procédé selon l'une des revendications 1 à 13, **caractérisé en ce que** la température de régénération est comprise entre 80°C et 400°C, de préférence entre 100°C et 250°C.

15. Procédé selon l'une des revendications 1 à 12, **caractérisé en ce qu'**au moins une partie du flux gazeux débarrassé d'au moins une partie desdites impuretés est soumis à au moins une étape de distillation cryogénique.

16. Adsorbant contenant une zéolite de type X ayant un rapport Si/Al de l'ordre de 1, et contenant de 10 à 98% de cations baryum, de 2 à 90% de cations sodium et/ou potassium, la somme des cations baryum et potassium et/ou sodium présents dans la zéolite représentant au moins 50% de la totalité des cations échangeables.

17. Adsorbant selon la revendication 16, **caractérisé en ce que** la zéolite contient de 70 à 96% de cations baryum, le reste des sites échangeables étant occupés par des cations sodium et/ou potassium.

## Claims

1. Process for purifying a gas stream containing at least one impurity chosen from the group formed by propane, nitrogen protoxide and ethylene, in which process:
(a) the gas stream to be purified is brought into contact with at least one adsorbent comprising at least one X zeolite containing barium cations;
(b) at least one impurity is adsorbed on the said adsorbent.

2. Process according to Claim 1, **characterized in that** the X zeolite contains at least 30% of barium cations, preferably at least 70% of barium cations and even more preferably from 75 to 98% of barium cations.

3. Process according to either of Claims 1 and 2, **characterized in that** the X zeolite has a pore size ranging between 4 and 10 Å, preferably between 5 and 8 Å.

4. Process according to one of Claims 1 to 4, **characterized in that** the zeolite furthermore contains at least one cation of Group IA or IIA, preferably potassium and/or sodium cations.

5. Process according to one of Claims 1 to 4, **characterized in that** the zeolite has an Si/Al ratio ranging between 1 and 1.40, preferably ranging between 1 and 1.15, preferably about 1.

6. Process according to one of Claims 1 to 5, **characterized in that** the gas stream is an air stream.

7. Process according to one of Claims 1 to 6, **characterized in that** the gas stream to be purified furthermore contains at least one impurity chosen from carbon dioxide and water vapour.

8. Process according to one of Claims 1 to 7, **characterized in that** at least one impurity chosen from carbon dioxide and water vapour is furthermore adsorbed and preferably carbon dioxide or water vapour is adsorbed on the X zeolite containing barium cations.

9. Process according to one of Claims 1 to 8, **characterized in that** the gas stream is at a temperature ranging between -40°C and +80°C.

10. Process according to one of Claims 1 to 9, **characterized in that** the adsorption pressure ranges between 3 bar and 40 bar, preferably between 5 bar and 25 bar.

11. Process according to one of Claims 1 to 10, **characterized in that** the desorption pressure ranges between 0.5 bar and 6 bar, preferably between 1 bar and 1.5 bar.

12. Process according to one of Claims 1 to 11, **characterized in that** the flow rate of the gas stream ranges between 1 and 10⁶ Sm³/h, preferably between 10⁴ and 5 × 10⁵ Sm³/h.

13. Process according to one of Claims 1 to 12, **characterized in that** it is of the PSA or TSA, preferably TSA, type.

14. Process according to one of Claims 1 to 13, **characterized in that** the regeneration temperature ranges between 80°C and 400°C, preferably between 100°C and 250°C.

15. Process according to one of Claims 1 to 12, **characterized in that** at least a portion of the gas stream stripped of at least some of the said impurities is subjected to at least one cryogenic distillation step.

16. Adsorbent containing an X-type zeolite having an Si/Al ratio of about 1 and containing from 10 to 98% of barium cations and from 2 to 90% of sodium and/or potassium cations, the sum of the barium and potassium and/or sodium cations present in the zeolite representing at least 50% of all of the exchangeable cations.

17. Adsorbent according to Claim 16, **characterized in that** the zeolite contains from 70 to 96% of barium cations, the rest of the exchangeable sites being occupied by sodium and/or potassium cations.

## Patentansprüche

1. Verfahren zum Reinigen eines Gasstroms, der mindestens eine Verunreinigung ausgewählt aus der Gruppe bestehend aus Propan, Distickstoffoxid und Ethylen enthält, bei dem:
a) der zu reinigende Gasstrom mit mindestens einem Adsorptionsmittel in Kontakt gebracht wird, das mindestens einen Zeolith X umfasst, welcher Bariumkationen enthält;
b) mindestens eine Verunreinigung auf dem Adsorptionsmittel adsorbiert wird.

2. Verfahren nach Anspruch 1, **dadurch gekennzeichnet, dass** der Zeolith X mindestens 30 % Bariumkationen enthält, vorzugsweise mindestens 70 % Bariumkationen und besonders bevorzugt 75 bis 98 % Bariumkationen.

3. Verfahren nach einem der Ansprüche 1 oder 2, **dadurch gekennzeichnet, dass** der Zeolith X eine Porengröße aufweist, die zwischen 4 und 10 Å liegt, vorzugsweise zwischen 5 und 8 Å.

4. Verfahren nach einem der Ansprüche 1 bis 4, **dadurch gekennzeichnet, dass** der Zeolith ferner mindestens ein Kation der Gruppe IA oder IIA enthält, vorzugsweise Kalium- und/oder Natriumkationen.

5. Verfahren nach einem der Ansprüche 1 bis 4, **dadurch gekennzeichnet, dass** der Zeolith ein Si/Al Verhältnis aufweist, das zwischen 1 und 1,40 liegt, vorzugsweise zwischen 1 und 1,15, insbesondere in der Größenordnung von 1.

6. Verfahren nach einem der Ansprüche 1 bis 5, **dadurch gekennzeichnet, dass** der Gasstrom ein Luftstrom ist.

7. Verfahren nach einem der Ansprüche 1 bis 6, **dadurch gekennzeichnet, dass** der zu reinigende Gasstrom ferner mindestens eine Verunreinigung ausgewählt aus Kohlendioxid und Wasserdampf enthält.

8. Verfahren nach einem der Ansprüche 1 bis 7, wobei ferner mindestens eine Verunreinigung ausgewählt aus Kohlendioxid und Wasserdampf adsorbiert wird, wobei das Kohlendioxid oder der Wasserdampf vorzugsweise auf dem Zeolith X adsorbiert werden, der Bariumkationen enthält.

9. Verfahren nach einem der Ansprüche 1 bis 8, **dadurch gekennzeichnet, dass** der Gasstrom eine Temperatur zwischen -40 °C und +80 °C aufweist.

10. Verfahren nach einem der Ansprüche 1 bis 9, **dadurch gekennzeichnet, dass** der Adsorptionsdruck zwischen 3 bar und 40 bar, vorzugsweise 5 bar und 25 bar liegt.

11. Verfahren nach einem der Ansprüche 1 bis 10,
**dadurch gekennzeichnet, dass** der Desorptionsdruck zwischen 0,5 bar und 6 bar, vorzugsweise 1 bar und 1,5 bar liegt.

12. Verfahren nach einem der Ansprüche 1 bis 11,
**dadurch gekennzeichnet, dass** der Durchsatz des Gasstroms zwischen 1 und 10⁶ Nm³/h, vorzugsweise 10⁴ und 5·10⁵ Nm³/h liegt.

13. Verfahren nach einem der Ansprüche 1 bis 12,
**dadurch gekennzeichnet, dass** es vom Typ PSA oder TSA, vorzugsweise TSA ist.

14. Verfahren nach einem der Ansprüche 1 bis 13,
**dadurch gekennzeichnet, dass** die Regenerationstemperatur zwischen 80 °C und 400 °C liegt, vorzugsweise zwischen 100 °C und 250 °C.

15. Verfahren nach einem der Ansprüche 1 bis 12, **dadurch gekennzeichnet, dass** mindestens ein Anteil des mindestens zum Teil von Verunreinigungen befreiten Gasstroms mindestens einem Schritt einer kryogenen Destillation unterworfen wird.

16. Adsorptionsmittel, das einen Zeolith vom Typ X enthält, der ein Si/Al Verhältnis der Größenordnung 1 aufweist sowie 10 bis 98 % Bariumkationen und 2 bis 90 % Natrium- und/oder Kaliumkationen enthält, wobei die Summe der im Zeolith vorkommenden Barium- und Kalium- und/oder Natriumkationen mindestens 50 % der Gesamtheit der austauschbaren Kationen darstellt.

17. Adsorptionsmittel nach Anspruch 16, **dadurch gekennzeichnet, dass** der Zeolith 70 bis 96 % Bariumkationen enthält, wobei die restlichen austauschbaren Stellen durch Natrium- und/oder Kaliumkationen besetzt sind.
